# EUROPEAN PATENT SPECIFICATION

(11) **EP 3 960 347 B1**
(45) Date of publication and mention of the grant of the patent: **04.10.2023**
(21) Application number: 21190321.6
(22) Date of filing: 09.08.2021
(51) Int. Cl.: B23D 45/16, B27G 19/04

(54) **PORTABLE CUTTING MACHINE**
TRAGBARE SCHNEIDEMASCHINE
MACHINE DE DÉCOUPE PORTABLE

(30) Priority: 26.08.2020 JP 2020142562
(43) Date of publication of application: 02.03.2022
(73) Proprietor: Yamabiko Corporation, Ohme-shi Tokyo 198-8760 (JP)
(72) Inventor: NOMURA, Fumio, Tokyo 198-8760 (JP); NAKAGANNA, Hiroshi, Tokyo 198-8760 (JP)
(74) Representative: Germain Maureau

(56) References cited:
- GB-A- 2 492 869
- JP-A- 2010 029 986
- US-A1- 2009 023 372
- US-A1- 2019 202 046
- US-B2- 10 471 582

## Description

### BACKGROUND

The present disclosure relates to a portable cutting machine for cutting, for example, concrete, asphalt, or other materials.

When using this type of portable cutting machine, an operator holds a cutting machine body and causes a disk-like cutting blade, while being rotated by the power of an engine, to touch and cut a cutting target. During this cutting operation, the safety of the operation is improved by a protection cover covering the portion of the cutting blade excluding the portion that comes in contact with the cutting target. The protection cover is turnable about the central axis of the cutting blade with respect to the cutting machine body, and usable at an angle suitable for the posture of the cutting machine during operation, the shape of the cutting target, or other conditions (see, e.g., Japanese Patent No. 5760658).

In Japanese Patent No. 5760658, an arm that rotatably supports a cutting blade is provided with a protection cover at its end. The part, of the protection cover, to be attached to the arm has a flange, on which right and left rubber dampers are abut from both sides along the central axis. In addition, the rubber dampers have right and left press plates at their outer sides. A holder is attached to the arm with a plurality of attachment bolts. The holder clamps the right and left rubber dampers and the flange along the central axis. The attachment bolts include springs for pressing the right and left rubber dampers against the flange.

Another example of the prior art is document US 2009/023372 A1, which discloses a portable cutting machine, comprising: a cutting blade having a disk-like shape and configured to cut a cutting target through a rotational motion about a central axis; a cutting machine body configured to rotatably support the cutting blade; a protection cover covering a portion in a circumferential direction of the cutting blade and exposing a portion other than the portion in the circumferential direction of the cutting blade, the protection cover including an attachment part to be attached to the cutting machine body so as to be turnable about the central axis; the attachment part having a cylindrical shape extending around the central axis; an elastic member disposed on an outer circumferential surface of the attachment part; and a fastening tool configured to fasten the elastic member to the attachment part and kept from turning about the central axis with respect to the cutting machine body, wherein the fastening tool includes a screw, and a fastening force is adjustable through rotation of the screw; wherein the fastening tool includes a band that surrounds the elastic member, and a fastening force of the band is changeable through the rotation of the screw; wherein the band includes a first projecting piece and a second projecting piece projecting radially outward and circumferentially spaced apart from each other, the first projecting piece and the second projecting piece including a first insertion hole and a second insertion hole, respectively, into which the screw is inserted; wherein the screw is inserted from the first insertion hole to the second insertion hole, and is screwed into a nut located on a side of the second projecting piece opposite to the first projecting piece ; and wherein the first projecting piece, the second projecting piece, the screw and the nut project radially outward beyond the band.

### SUMMARY

As stated above, the operator needs to adjust the angle of the protection cover in accordance with the posture of the cutting machine, the shape of the cutting target, and the other conditions. However, the adjustment operation becomes complicated if any tool is needed to adjust the angle. It is therefore desirable to be able to adjust the angle without using any tool. In addition, after the angle adjustment of the protection cover, the protection cover needs to be firmly fixed not to be displaced during the cutting operation.

In this respect, according to the protection cover according to Japanese Patent No. 5760658, a spring mechanism stabilizes the force pressing the right and left rubber dampers against the flange of the protection cover. The angle adjustment of the protection cover without using any tool, and fixing the protection cover after the angle adjustment are both believed to be achieved.

However, in cutting concrete or other materials, a great exciting force may continuously act on the protection cover. In order to hold the protection cover not to turn against this exciting force, there is a need to increase the spring constant of the spring in Japanese Patent No. 5760658, and to prepare press plates, attachment bolts, or other means having a strength strong enough to withstand the strong repulsive force of the spring. Accordingly, the number of the components and the weight of the cutting machine may increase. Since two or more attachment bolts are required in Japanese Patent No. 5760658, two or more springs are also needed in accordance with the number of the attachment bolts, which makes the problems of an increase in the number of components and in the weight more significant.

In the case of Japanese Patent No. 5760658, only the locations of the attachment bolts and the springs are strongly pressed against the flange of the protection cover, and the surface pressure of the other portion tends to decrease. This may easily make the turn resistance unstable.

For example, when cutting concrete, the resultant concrete powder is mixed with water into concrete mud. If this concrete mud permeates into the spring mechanism and solidifies, operation failure may occur, which may adversely affect the angle adjustment of the protection cover and the holding after the adjustment.

The present disclosure was made in view of the problems. It is an objective of the present disclosure to adjust the angle of a protection cover easily without any tool and immovably hold the protection cover after the adjustment, while reducing the number of components and the weight.

### SOLUTION TO THE PROBLEM

In order to achieve the above objective, according to the present disclosure, an elastic member is fastened to an outer circumferential surface of a cylindrical attachment part of a protection cover. The fastening force gives turn resistance to the protection cover.

According to the invention a portable cutting machine includes a cutting blade having a disk-like shape and configured to cut a cutting target through a rotational motion about a central axis; a cutting machine body configured to rotatably support the cutting blade; a protection cover covering a portion in a circumferential direction of the cutting blade and exposing a portion other than the portion in the circumferential direction of the cutting blade, the protection cover including an attachment part to be attached to the cutting machine body so as to be turnable about the central axis; the attachment part having a cylindrical shape extending around the central axis; an elastic member disposed on an outer circumferential surface of the attachment part; and a fastening tool configured to fasten the elastic member to the attachment part and kept from turning about the central axis with respect to the cutting machine body.

According to this configuration, once the fastening tool fastens the elastic member to the attachment part of the protection cover, a wide area of the elastic member is substantially uniformly pressed against the attachment part because the attachment part has a cylindrical shape. It is therefore possible to give stable turn resistance of the protection cover about the central axis without using a plurality of springs or mounting bolts as in Patent Document 1. Accordingly, the protection cover can be easily adjusted at an angle without any tool and immovably held after the adjustment, while reducing the number of components and the weight.

In addition, since the elastic member, for example, is fastened to the outer circumferential surface of the attachment part, the elastic member and the attachment part come into tight contact with each other. It is therefore possible to give stable turn resistance for a long period of time, without allowing concrete mud to enter the gap between the elastic member and the outer circumferential surface of the attachment part.

Note that the turn resistance of the protection cover may be set within an appropriate range by adjusting the fastening force of the fastening tool only at the time of shipment from a factory or the time of maintenance, for example. There is thus no need to adjust the fastening force of the fastening tool, that is, no need to bother an operator in ordinary use.

According to an embodiment, the elastic member has a cylindrical shape, and an inner circumferential surface of the elastic member comes into contact with the outer circumferential surface of the attachment part.

This configuration increases the contact area between the elastic member and the attachment part of the protection cover, and can give the turn resistance over the entire circumference. It is therefore possible to give desired magnitude of the turn resistance stably. The elastic member may be a cylindrically molded member, or may be obtained by deforming an a plate-like product into a cylindrical shape.

According to an embodiment, a sliding member is interposed between the inner circumferential surface of the elastic member and the outer circumferential surface of the attachment part.

According to this configuration, the sliding member is interposed between the elastic member and the attachment part, which stabilizes the turn resistance of the protection cover.

According to the invention, the fastening tool includes a screw, and a fastening force is adjustable through rotation of the screw.

According to this configuration, the screw is rotated to adjust the force for fastening the elastic member substantially steplessly. Accordingly, the turn resistance of the protection cover, too, changes substantially steplessly, which facilitates the adjustment of the turn resistance, for example, at the production site or at the time of maintenance.

According to the invention, the fastening tool includes a band that surrounds the elastic member, and a fastening force of the band is changeable through the rotation of the screw.

According to this configuration, when the screw is rotated, for example, in the direction in which the circumferential length of the band decreases, the fastening force of the fastening tool increases. Accordingly, the turn resistance of the protection cover increases. On the other hand, when the screw is rotated in the direction in which the circumferential length of the band increases, the fastening force of the fastening tool decreases. Accordingly, the turn resistance of the protection cover decreases. The turn resistance of the protection cover can thus be easily adjusted depending on the rotation direction of the screw.

According to an embodiment, the elastic member, together with the fastening tool, is substantially kept from turning about the central axis with respect to the cutting machine body.

That is, if the elastic member is turnable with respect to the cutting machine body, it depends on circumstances whether turning of the protection cover results in either one of the following cases: a case in which the elastic member turns together with the protection cover with respect to the cutting machine body; or a case in which the elastic member is fixed to the cutting machine body, and the attachment part of the protection cover turns with respect to the elastic member. The sliding part is different between the case where the elastic member turns with respect to the cutting machine body and the case where the attachment part of the protection cover turns with respect to the elastic member. Thus, the turn resistance of the protection cover may become unstable.

In the configuration according to the present disclosure, since the elastic member hardly turns with respect to the cutting machine body, mainly the attachment part of the protection cover turns with respect to the elastic member. Thus, stable turn resistance of the protection cover is given due to the friction between the elastic member and the outer circumferential surface of the attachment part of the protection cover.

According to an embodiment, the band includes an engaging portion to engage with the elastic member.

According to this configuration, gradual tightening of the band on the elastic member makes the band pressed against the elastic member, causing the elastic member to be elastically deformed and partially engaged with the engaging portion. Accordingly, the engaging portion is engaged with the elastic member. The elastic member is fixed to the fastening tool in this manner. The elastic member is therefore kept from turning about the central axis, together with the fastening tool, with respect to the cutting machine body, as in the fifth aspect.

According to the invention, the band includes a first projecting piece and a second projecting piece projecting radially outward and circumferentially spaced apart from each other, the first projecting piece and the second projecting piece include a first insertion hole and a second insertion hole, respectively, into which the screw is inserted, the screw is inserted from the first insertion hole to the second insertion hole, and is screwed into a nut located on a side of the second projecting piece opposite to the first projecting piece, and the cutting machine body includes a housing recess for housing the first projecting piece, the second projecting piece, the screw, and the nut.

According to this configuration, tightening the screw with the screw screwed into the nut causes the first and second projecting pieces to come close to each other, thereby increasing the fastening force of the band. On the other hand, loosening the screw causes the first and the second projecting pieces to be apart from each other, thereby decreasing the fastening force of the band. Since the first projecting piece, the second projecting piece, the screw, and the nut of the fastening tool are housed in the housing recess of the cutting machine body, the fastening tool is kept from turning about the central axis due to the screw, the nut, and other members coming into contact with the inner surface of the housing recess. That is, the fastening tool is reliably kept from turning about the central axis using the simple configuration of housing the first projecting piece, the second projecting piece, the screw, and the nut of the fastening tool in the housing recess of the cutting machine body.

According to an embodiment, the cutting machine body includes a main shaft to which the cutting blade is fixed, a bearing member configured to rotatably support the main shaft, and a main shaft holder having a cylindrical shape into which the bearing member is inserted, the attachment part of the protection cover is configured to surround the main shaft holder, and a collar is interposed between the attachment part and the main shaft holder.

According to this configuration, the collar is present between the attachment part of the protection cover and the main shaft holder of the cutting machine body. This configuration prevents generation of large turn resistance between the attachment part and the main shaft holder during turning of the protection cover, thereby making it possible to give intended turn resistance to the protection cover through the elastic member.

According to an embodiment, the housing recess is formed in a holding member that is a component separate from the cutting machine body.

According to an embodiment, an intermediate member is interposed between the first projecting piece and the second projecting piece.

In this configuration, the first and second projecting pieces can be spaced apart from each other at a predetermined distance.

### ADVANTAGES OF THE INVENTION

As described above, the attachment part of the protection cover has the cylindrical shape; and the elastic member provided on the outer circumferential surface of the attachment part is fastened, with the fastening tool, to the outer circumferential surface of the attachment part. It is therefore possible to easily adjust the angle of the protection cover without any tool and immovably hold the protection cover after the adjustment, while reducing the number of components and the weight.

### BRIEF DESCRIPTION OF THE DRAWINGS

FIG. 1 is a diagram illustrating a side view of a portable cutting machine according to an embodiment.
FIG. 2 is a diagram illustrating a side view of front portions of a cutting blade, a protection cover, and an arm.
FIG. 3 is a diagram illustrating a rear view of rear portions of the cutting blade, the protection cover, and the arm.
FIG. 4 is a diagram illustrating an exploded perspective view of the front portions of the protection cover and the arm.
FIG. 5 is a diagram illustrating a cross-sectional view taken along line V-V in FIG. 2.
FIG. 6 is a diagram illustrating a cross-sectional view taken along line VI-VI in FIG. 3.
FIG. 7 is a diagram illustrating a perspective view of the protection cover as viewed from the right.
FIG. 8 is a diagram illustrating an exploded perspective view of a fastening tool and an elastic member.
FIG. 9 is a diagram illustrating a variation not according to the invention, and corresponds to FIG. 6.

### DETAILED DESCRIPTION

An embodiment of the present disclosure will be described in detail below with reference to the drawings. The following description of an advantageous embodiment is only an example in nature, and is not intended to limit the scope, application, or uses of the present disclosure.

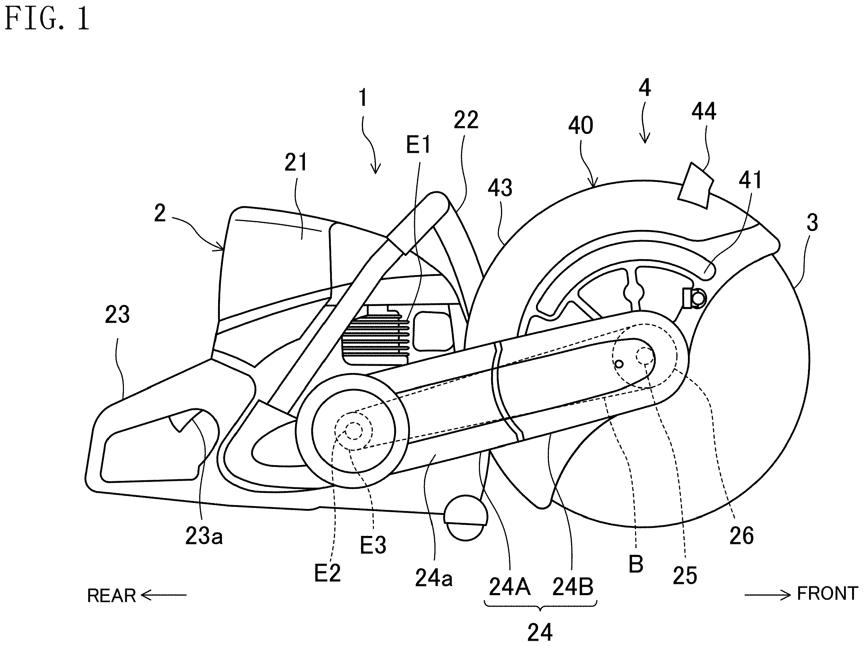

FIG. 1 shows a portable cutting machine 1 according to the embodiment of the present disclosure. The portable cutting machine 1 is a so-called "engine cutter", which is used, for example, at an operation of cutting a cutting target made of concrete, asphalt, or other materials at various construction sites or other places. The cutting target is not limited to a structure made of concrete or asphalt, but includes various hard materials. The portable cutting machine 1 is a portable engine cutter that can be carried by one operator, and can also be operated to cut an object by a single operator.

The portable cutting machine 1 includes a cutting machine body 2 on which an engine E1 is mounted, a disk-like cutting blade 3 for cutting a cutting target, and a protection cover 4 to cover a part of the cutting blade 3. In the description of this embodiment, as shown in the drawings, the front and rear when an operator holds and uses the portable cutting machine 1 are simply referred to as the "front" and the "rear", respectively. In addition, the right and left as viewed from the operator when the operator holds and uses the portable cutting machine 1 are simply referred to as the "right" and the "left", respectively. This definition of the directions is for the sake of simplicity of the description, and does not limit the present disclosure. In use, the portable cutting machine 1 may change its posture such that the front is oriented below or may be inclined.

The engine E1 mounted on the cutting machine body 2 may be a two- or four-cycle internal combustion engine. In place of the engine E1, an electric motor may be mounted. In addition to the engine E1, the cutting machine body 2 is provided with an engine cover 21 that covers the engine E1, a front handle 22, a rear handle 23, and an arm 24 that protrudes forward. Although not shown, the cutting machine body 2 is further provided with a fuel tank and other components. The output of the engine E1 is output from a drive shaft E2 extending in the right-to-left direction. At the right end of the drive shaft E2, a drive pulley E3 is fixed not to rotate relative to the drive shaft E2. A power transmission belt B is wrapped around the drive pulley E3. The drive shaft E2, the drive pulley E3, and the power transmission belt B are covered by a belt cover 24a. The arm 24 has the belt cover 24a.

The front and rear handles 22 and 23 are integral with the engine E1. The front handle 22 extends continuously from the right through the upper side to the left of the engine E1. The rear handle 23 protrudes rearward from where the engine E1 and the front handle 22 are located. An operator performs the cutting operation while holding the front and rear handles 22 and 23. The rear handle 23 includes a throttle lever 23a for adjusting the speed of the engine E1.

The arm 24 rotatably supports the cutting blade 3. The protection cover 4 is attached to the arm 24. In this embodiment, the arm 24 protrudes forward from the right of the engine E1, and the front end of the arm 24 is located forward of the front end of the engine E1. In the state in which the portable cutting machine 1 is placed on a horizontal plane, the arm 24 inclines with its front side pointing upward.

The arm 24 is divided into two parts at a longitudinally intermediate portion and includes a rear arm component 24A and a front arm component 24B. The rear arm component 24A is integral with a member to which the engine E1 is fixed. The front arm component 24B is fixed to the rear arm component 24A with bolts or other means (not shown). Note that such a longitudinally divided structure may not be employed and an integral arm (not shown) may be provided.

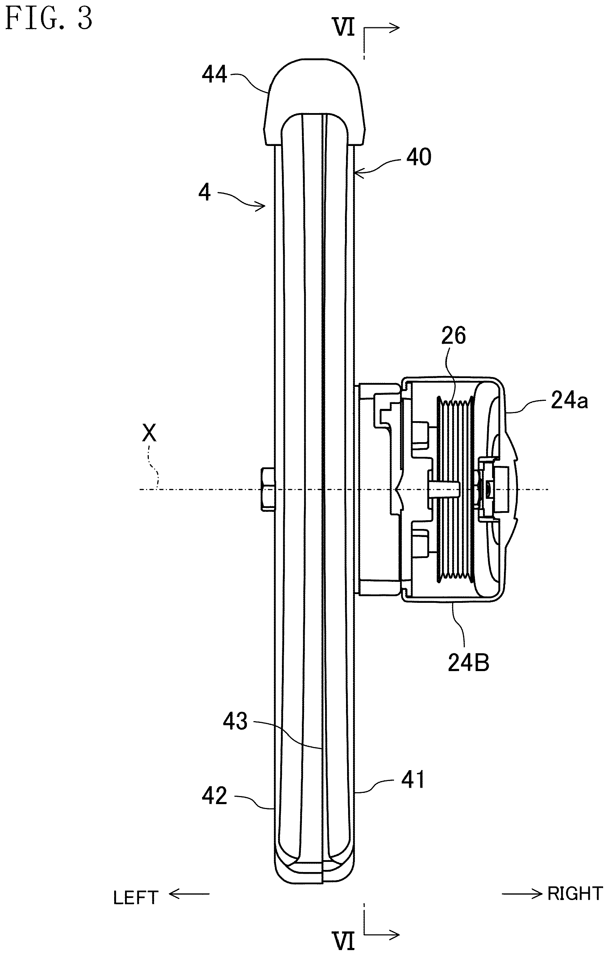

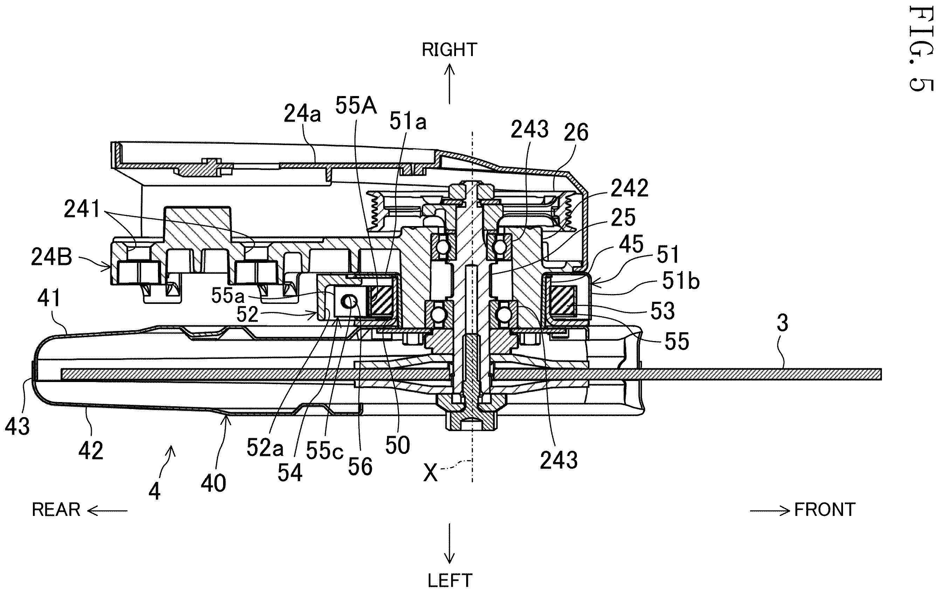

As shown in FIG. 5, the front arm component 24B may be, for example, a cast product or an injection-molded product of a synthetic resin with a high strength. The front arm component 24B has, at its rear, a plurality of fastening holes 241 to which the rear arm component 24A is fastened and fixed (shown in FIG. 1). A cylindrical main shaft holder 242 is integrally molded at a front portion of the front arm component 24B. The main shaft holder 242 has an imaginary central axis X (shown in FIGS. 3, 5, and 6) extending in the right-to-left direction. This central axis X is parallel to the drive shaft E2 indicated by a broken line in FIG. 1.

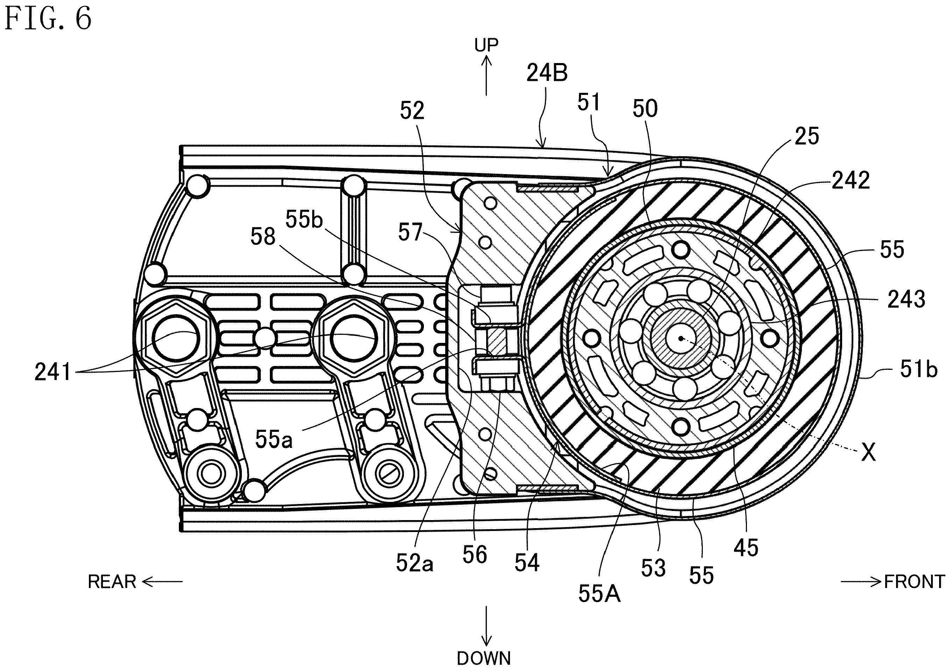

As shown in FIGS. 5 and 6, a plurality of bearing members 243, e.g., ball bearings, for rotatably supporting a main shaft 25 are inserted into the main shaft holder 242. These bearing members 243 also constitute a part of the cutting machine body 2 and are held in predetermined positions by the main shaft holder 242. The rotation center of the bearing members 243 is coaxial with the central axis X.

The main shaft 25 is rotatably supported by the bearing members 243 while being inserted into the bearing members 243. The rotation center of the main shaft 25 is coaxial with the central axis X. As shown in FIG. 5, the right end of the main shaft 25 protrudes to the right beyond the front arm component 24B. At the right end of this main shaft 25, a driven pulley 26 is fixed not to rotate relative to the main shaft 25. The power transmission belt B indicated by the broken line in FIG. 1 is wrapped around the driven pulley 26. The power transmission belt B transmits the rotation force of the engine E1 to the main shaft 25.

The left end of the main shaft 25 protrudes to the left beyond the front arm component 24B. At the left end of this main shaft 25, the cutting blade 3 is fixed not to rotate relative to the main shaft 25. The cutting blade 3 is a member that is driven and rotated about the central axis X by the engine E1, and cuts a cutting target by the rotational motion about this central axis X. The cutting blade 3 has a typically known fixing structure, and detailed description thereof will thus be omitted.

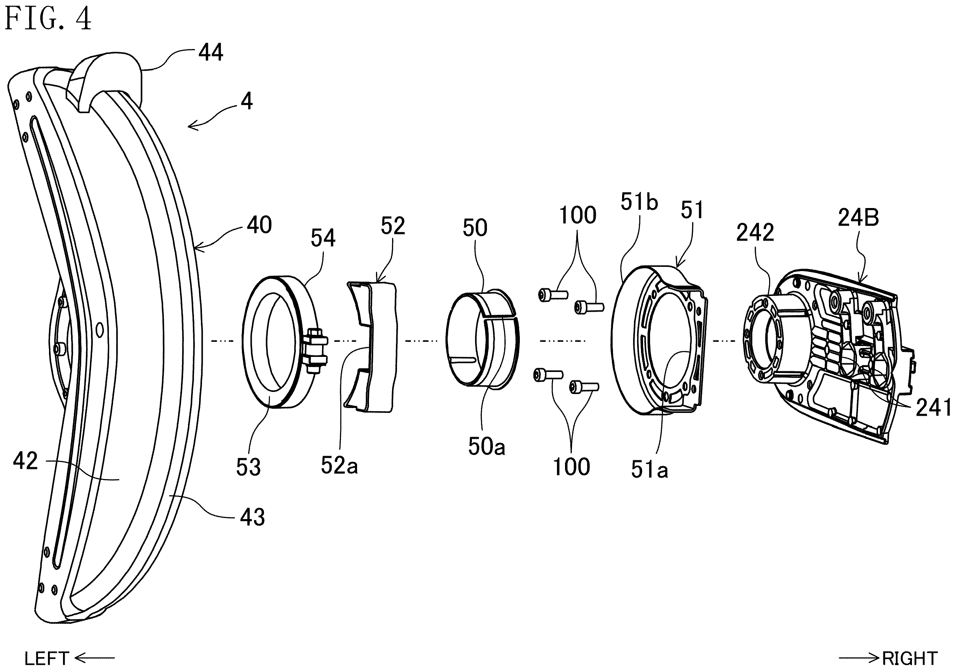

A collar 50 shown in FIG. 4 is a metal or resin member molded into a shape like a cylinder, and has a thin slit 50a at a portion in the circumferential direction. The slit 50a allows fine adjustment of the diameter of the collar 50. This slit 50a may be however omitted. As shown in FIGS. 5 and 6, the collar 50 is fitted to the outer surface of the main shaft holder 242, and has an inner circumferential surface extending along the outer circumferential surface of the main shaft holder 242. Example materials of the collar 50 include various hard resins and brass, among which a material with a lower sliding resistance than the material of the front arm component 24B is preferred in one embodiment.

### (Configuration of Protection Cover 4)

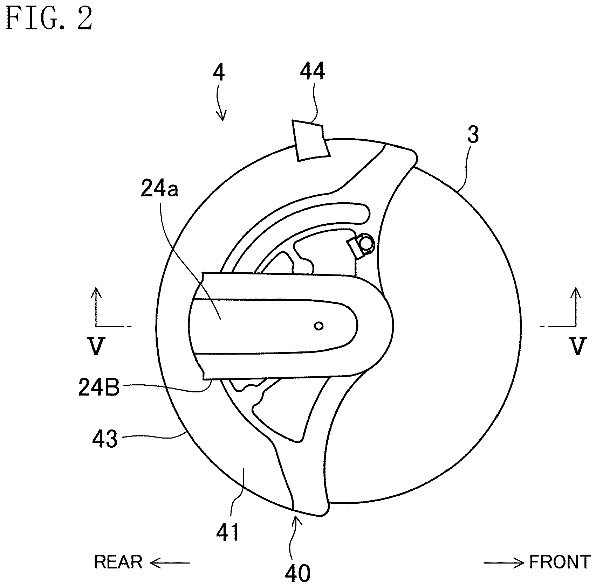

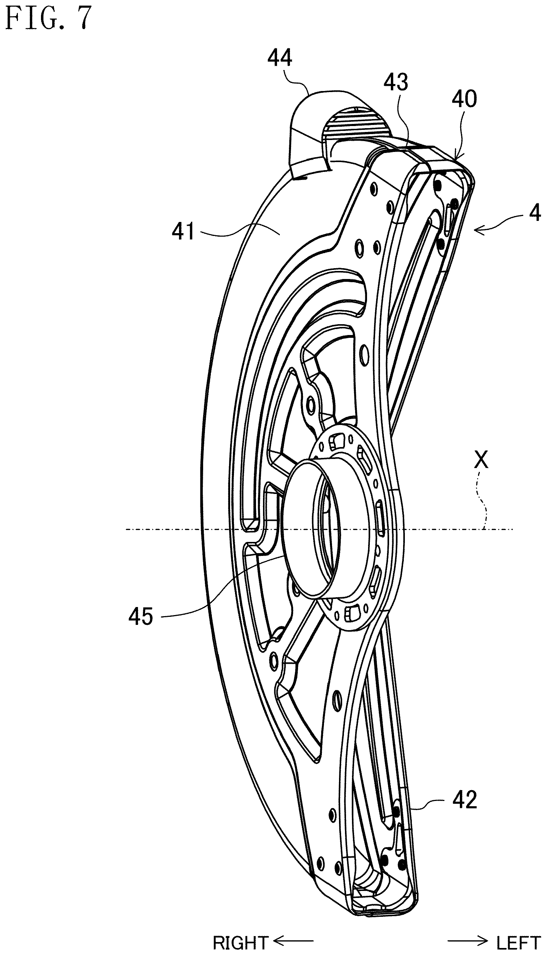

Next, a configuration of the protection cover 4 will be described. The protection cover 4 includes a cover body 40 in a shape close to a semicircle as viewed from side, as shown in FIG. 2 or other figures, and an attachment part 45 (shown in FIG. 7) to be attached to the front arm component 24B so as to be turnable about the central axis X with respect to the front arm component 24B. The cover body 40 covers a portion in the circumferential direction of the cutting blade 3 and exposes the other part. As shown in FIGS. 2 to 4, the cover body 40 includes a right side plate 41 covering the right side surface of the cutting blade 3, a left side plate 42 covering the left side surface of the cutting blade 3, and an arc-like plate 43 covering the edge of the cutting blade 3. The arc-like plate 43 is continuous with the radially outer edges of the right and left side plates 41 and 42 and thus covers both the side surfaces and edge of the cutting blade 3 over a predetermined range.

The arc-like plate 43 of the cover body 40 includes a protrusion 44 where a hand of the operator is put to turn the protection cover 4 about the central axis X. The protrusion 44 protrudes radially outward from the outer circumferential surface of the cover body 40. By putting a hand on the protrusion 44 and applying force in the circumferential direction, the operator turns the protection cover 4 clockwise and counterclockwise in FIG. 2. The turn range of the protection cover 4 is set in advance. For example, a turn stopper or other means (not shown) is provided.

### (Angle Adjustment Structure of Protection Cover 4)

The protection cover 4 has an angle adjustment structure. This angle adjustment structure allows the operator to turn the protection cover 4 with a hand without using any tool. The protection cover 4 can be held so as not to turn at a desired angle without using any tool. Now, the angle adjustment structure of the protection cover 4 will be described in detail.

As shown in FIG. 7, the attachment part 45 of the protection cover 4 is provided on the right side plate 41 of the cover body 40, and is formed in a cylindrical shape extending around the central axis X. The attachment part 45 can be made of a metal material. The attachment part 45 has an outer peripheral surface that is a smooth surface without projections and depressions. As shown in FIGS. 5 and 6, the attachment part 45 surrounds the main shaft holder 242, and has an inner diameter set larger than the outer diameters of the main shaft holder 242 and the collar 50. The collar 50 is interposed between the attachment part 45 and the main shaft holder 242. The collar 50 is made of a material with a lower sliding resistance, which reduces friction between the attachment part 45 and the collar 50. Accordingly, when adjusting the angle of the protection cover 4, the attachment part 45 smoothly turns about the central axis X, and the deterioration of the movement due to long-term use decreases. The collar 50 may be provided as necessary and may be omitted.

FIG. 4 shows a case 51 that is a member for housing an elastic member 53 and a fastening tool 54, and is located on the left of the front arm component 24B. The case 51 has an insertion hole 51a into which the collar 50 and the main shaft holder 242 are inserted. The case 51 has a circumferential wall 51b protruding to the left. As shown in FIG. 6, the circumferential wall 51b continuously extends from an upper side of the main shaft 25 through the front side to a lower side, and is open toward the rear. The case 51 is fastened and fixed to the front arm component 24B by bolts 100 shown in FIG. 4.

A holding member 52 shown in FIG. 4 holds the fastening tool 54 to keep the fastening tool 54 from turning about the central axis X with respect to the cutting machine body 2. In this embodiment, the holding member 52 is a component separate from the front arm component 24B of the cutting machine body 2. The holding member 52 is located at the rear of the case 51 and in a vertically elongated shape to close the open region at the rear of the case 51. As shown in FIG. 6, the upper and lower parts of the holding member 52 are to be respectively fitted to the upper and lower parts of the circumferential wall 51b of the case 51. The holding member 52 is fastened and fixed to the case 51 by, for example, a fastening tool or other means. This configuration keeps the holding member 52 from turning about the central axis X relative to the case 51. The holding member 52 may be integral with the front arm component 24B.

The holding member 52 has a housing recess 52a capable of housing a part of the fastening tool 54 which will be described later. The housing recess 52a is recessed rearward and open forward, that is, toward the inside of the circumferential wall 51b of the case 51. In addition, the housing recess 52a is open also to the left. Apart of the fastening tool 54 is moved to the right so as to be housed in the housing recess 52a.

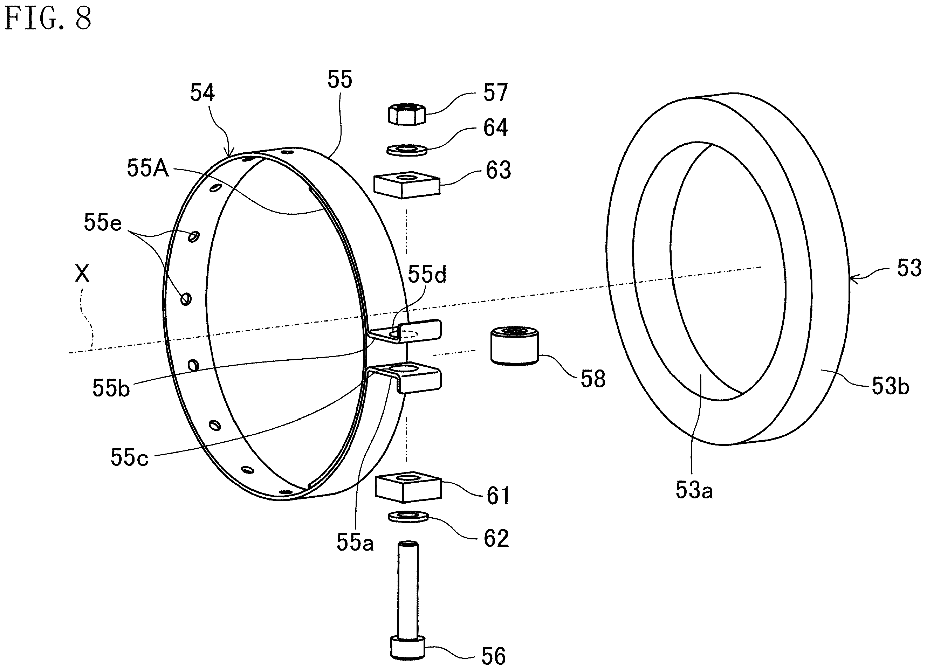

As shown in FIG. 8, the elastic member 53 has a cylindrical shape. As shown in FIGS. 5 and 6, this elastic member 53 surrounds the outer circumferential surface of the attachment part 45 of the protection cover 4. The elastic member 53 has an inner diameter substantially the same as, or slightly larger than, or slightly smaller than the outer diameter of the attachment part 45. The elastic member 53 has an inner circumferential surface 53a (shown in FIG. 8) extending along the central axis X and having a predetermined width. The inner circumferential surface 53a is a smooth surface without projections and depressions. The inner circumferential surface 53a of the elastic member 53 has a width set shorter than the dimension of the attachment part 45 in the same direction. The entire inner circumferential surface 53a of the elastic member 53 is in contact with the outer circumferential surface of the attachment part 45. The outer circumferential surface 53b (shown in FIG. 8) of the elastic member 53 also extends along the central axis X and has the same width as the inner circumferential surface 53a.

The material of the elastic member 53 is not particularly limited. Examples thereof include rubber such as silicone rubber and thermoplastic elastomer. In particular, silicone rubber is less affected by a change in the ambient temperature and less deteriorates over time. The material of the elastic member 53 may be selected such that the friction coefficient between the inner circumferential surface 53a of the elastic member 53 and the outer circumferential surface of the attachment part 45 is equal to or greater than a predetermined value.

As shown in FIGS. 4 and 6, the fastening tool 54 is for fastening the elastic member 53 to the outer circumferential surface of the attachment part 45 of the protection cover 4. In this embodiment, as shown in FIG. 8, the fastening tool 54 includes a band 55 surrounding the outer circumferential surface 53b of the elastic member 53, a screw 56, a square nut 63, and a nut 57. The band 55 is obtained, for example, by winding a metal belt-like member into a cylindrical shape. The band 55 includes, at one circumferential end, a first projecting piece 55a projecting radially outward. On the other hand, the band 55 includes, at the other circumferential end, a second projecting piece 55b projecting radially outward. The first and second projecting pieces 55a and 55b are spaced apart from each other in the circumferential direction of the band 55. In this embodiment, as shown in FIG. 6, at the time of assembly, the first and second projecting pieces 55a and 55b protrude rearward and are spaced apart from each other in the up and down direction. An intermediate cylindrical member (an intermediate member) 58 is interposed between the first projecting piece 55a and the second projecting piece 55b. The intermediate cylindrical member 58 functions as a spacer for securing a predetermined distance between the first and second projecting pieces 55a and 55b. By securing the predetermined distance, a desired turn resistance can be applied to the protection cover 4. The intermediate cylindrical member 58 may be provided as necessary and may be omitted.

The band 55 includes a support member 55A. The support member 55A is in an arc shape along the inner circumferential surface of the band 55, and is provided to close the gap between the first and second projecting pieces 55a and 55b inside the band 55. The inner circumferential surface of the band 55 is in sliding contact with the outer circumferential surface of the support member 55A. The band 55 having the support member 55A can provide a uniform fastening force over the entire circumference of the elastic member 53.

As shown in FIG. 8, the band 55 has engaging holes 55e to engage with the elastic member 53. The band 55 may have one, or two or more engaging holes 55e. In the case of providing a plurality of engaging holes 55e, the engaging holes 55e may be spaced apart from each other in the circumference direction of the band 55. Although not shown, the engaging holes 55e may be spaced apart from each other in the width direction of the band 55. The engaging holes 55e may have a circular shape, a slit shape, or an uneven shape. The engaging holes 55e, when pressed against the outer circumferential surface 53b of the elastic member 53, elastically deform the elastic member 53, and a part of the elastic member 53 enters the engaging holes 55e. Accordingly, the engaging holes 55e engage with the elastic member 53 and keep the elastic member 53 from making a relative turn with respect to the band 55. In place of the engaging holes 55e, the band 55 may have, on its inner circumferential surface, an engaging groove or the like (not shown).

As shown in FIG. 8, the first and second projecting pieces 55a and 55b have first and second insertion holes 55c and 55d, respectively, through which the screw 56 is inserted. The first and second insertion holes 55c and 55d are also spaced apart from each other in the up and down direction.

Under the first projecting piece 55a, a square washer 61 is located, under which a first washer 62 is located. On the second projecting piece 55b, the square nut 63 is located, on which a second washer 64 is located. The nut 57 is located on the second washer 64.

The screw 56 is inserted into the first washer 62 from below, penetrates the square washer 61, and is then inserted into the first insertion hole 55c, the intermediate cylindrical member 58, and the second insertion hole 55d. Next, the screw 56 is screwed into the square nut 63. Further, the second washer 64 is attached and fixed to the screw 56 with the nut 57. The double nut of the square nut 63 and the nut 57 reduces loosening. The screw 56 may be inserted in the opposite direction.

When the screw 56 is rotated in the tightening direction, the distance between the first and second projecting pieces 55a and 55b decreases, that is, the gap therebetween narrows. On the other hand, when the screw 56 is rotated in the loosening direction, the distance between the first and second projecting pieces 55a and 55b increases. The distance between the first and second projecting pieces 55a and 55b can be adjusted substantially steplessly based on the amount of rotation of the screw 56. A narrower distance between the first and second projecting pieces 55a and 55b results in a larger amount of elastic deformation of the elastic member 53, which makes it possible to fasten the elastic member 53 tightly on the outer circumferential surface of the attachment part 45. Since the force for fastening the elastic member 53 varies depending on the distance between the first and second projecting pieces 55a and 55b, the force for fastening the elastic member 53 can be adjusted substantially steplessly based on the amount of rotation of the screw 56.

According to the invention, after adjusting the force for fastening the elastic member 53, the first projecting piece 55a, the second projecting piece 55b, the screw 56, and the nut 57 of the fastening tool 54 are housed in the housing recess 52a, as shown in FIG. 6. The first projecting piece 55a, the second projecting piece 55b, the screw 56, and the nut 57 project radially outward beyond the band 55, and therefore engage with the inner surface of the housing recess 52a. The housing recess 52a is formed in the holding member 52 whose rotation is locked with respect to the front arm component 24B. The fastening tool 54 is thus kept from turning about the central axis X with respect to the cutting machine body 2. In short, the fastening tool 54 is reliably kept from turning about the central axis X, using a simple configuration of housing a part of the fastening tool 54 in the housing recess 52a.

### (Setting of Fastening Force)

The force for fastening the elastic member 53 changes the turn resistance of the protection cover 4 about the central axis X. Specifically, with an increase in the force for fastening the elastic member 53, the inner circumferential surface 53a of the elastic member 53 comes into strong contact with the outer circumferential surface of the attachment part 45 of the protection cover 4, which increases the force required to turn the protection cover 4. On the other hand, with a decrease in the force for fastening the elastic member 53, the inner circumferential surface 53a of the elastic member 53 comes into weak contact with the outer circumferential surface of the attachment part 45 of the protection cover 4, which decreases the force required to turn the protection cover 4.

The force for fastening the elastic member 53 is set to be equal to or greater than a first predetermined value and equal to or smaller than a second predetermined value. The first predetermined value is smaller than the second predetermined value. The first predetermined value is such a value that does not allow the protection cover 4 to turn even if a great exciting force continuously acts on the protection cover 4 during cutting of concrete or other materials. Accordingly, the angle of the protection cover 4 does not change unexpectedly during use. On the other hand, the second predetermined value is such a value that allows an operator with an average force to turn the protection cover 4 with a hand without using any tool or other means when adjusting the angle of the protection cover 4.

Note that the turn resistance of the protection cover 4 may be set within an appropriate range by adjusting the fastening force of the fastening tool 54 only at the time of shipment from a factory or the time of maintenance, for example. There is thus no need to adjust the fastening force of the fastening tool 54 in ordinary use. If the turn resistance of the protection cover 4 becomes lower than the appropriate range due to aging or other causes, the fastening tool 54 may be disassembled and readjusted to increase the fastening force.

### (Advantages of Embodiment)

As described above, according to this embodiment, once the fastening tool 54 fastens the elastic member 53 to the outer circumferential surface of the attachment part 45 of the protection cover 4, a wide area of the elastic member 53 is substantially uniformly pressed against the outer circumferential surface of the attachment part 45 because the attachment part 45 has a cylindrical shape. It is therefore possible to give stable turn resistance of the protection cover 4 about the central axis X without using a plurality of springs or mounting bolts as in known cases. Accordingly, the protection cover 4 can be easily adjusted at an angle without any tool and immovably held after the adjustment, while reducing the number of components and the weight.

In addition, since the elastic member 53 is fastened to the outer circumferential surface of the attachment part 45, the elastic member 53 and the attachment part 45 come into tight contact with each other. It is therefore possible to give stable turn resistance for a long period of time, without allowing concrete mud to enter the gap between the elastic member 53 and the outer circumferential surface of the attachment part 45.

In addition, since the engaging holes 55e of the fastening tool 54 engages with the elastic member 53, the elastic member 53 does not turn with respect to the cutting machine body 2. This configuration makes the attachment part 45 of the protection cover 4 to turn with respect to the elastic member 53 in all cases. It is therefore possible to give stable turn resistance of the protection cover 4 due to the friction between the elastic member 53 and the outer circumferential surface of the attachment part 45 of the protection cover 4.

In addition, the collar 50 is present between the attachment part 45 of the protection cover 4 and the main shaft holder 242 of the cutting machine body 2. This configuration prevents generation of large turn resistance between the attachment part 45 and the main shaft holder 242 during turning of the protection cover 4, thereby making it possible to give intended turn resistance to the protection cover 4 through the elastic member 53.

The above-described embodiment is merely illustrative in every respect and shall not be construed in a limited manner. All modifications and variations coming within the scope of the appended claims are also embraced.

For example, the configuration of the fastening tool 54 is not limited to the configuration described above. Various fastening tools capable of fastening the elastic member 53 by tightening screws or nuts can be used. A structure of changing the circumferential length of the band 55 may be used.

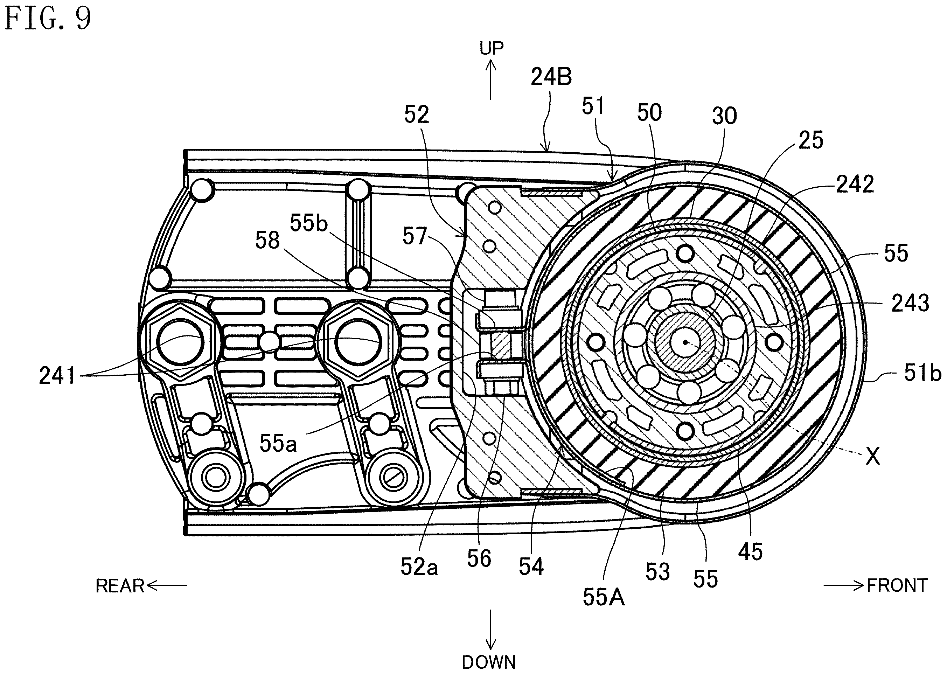

As in a variation not according to the invention shown in FIG. 9, a sliding member 30 may be interposed between the inner circumferential surface of the elastic member 53 and the outer circumferential surface of the attachment part 45. The sliding member 30 is molded into a cylindrical shape, and has an outer circumferential surface in contact with the inner circumferential surface of the elastic member 53 and an inner circumferential surface in contact with the outer circumferential surface of the attachment part 45. The sliding member 30 may be a cylindrical member, or may be obtained by molding a band-like member into a cylindrical shape.

The sliding member 30 may be made of, for example, a hard resin material or a metal material such as brass, but is not limited thereto. The sliding member 30 can be made of a material that is more slippery and harder than rubber. The sliding member 30 between the elastic member 53 and the attachment part 45 stabilizes not only the turn resistance of the protection cover 4, but also linearly change the fastening force of the fastening tool 54 and the turn resistance of the protection cover 4. As a result, the turn resistance of the protection cover 4 is set simply. In addition, the turn resistance varies at a smaller amount after the adjustment of the angle of the protection cover 4. Further, the turn resistance of the protection cover 4 is highly reproducible when the combination of the components is changed. Furthermore, a force applied to the protection cover 4 is gradually increased in adjusting the angle of the protection cover 4. Once the force exceeds a certain threshold value, the protection cover 4 turns immediately, and once applying the force is stopped, the protection cover 4 stops there immediately. It is therefore possible to achieve the angle adjustment with click feeling.

### INDUSTRIAL APPLICABILITY

As described above, the present disclosure is suitable for a portable cutting machine for cutting, for example, concrete, asphalt, or other materials.

## Claims

1. A portable cutting machine (1), comprising:
a cutting blade (3) having a disk-like shape and configured to cut a cutting target through a rotational motion about a central axis (X);
a cutting machine body (2) configured to rotatably support the cutting blade (3);
a protection cover (4) covering a portion in a circumferential direction of the cutting blade (3) and exposing a portion other than the portion in the circumferential direction of the cutting blade (3), the protection cover (4) including an attachment part (45) to be attached to the cutting machine body (2) so as to be turnable about the central axis (X);
the attachment part (45) having a cylindrical shape extending around the central axis (X);
an elastic member (53) disposed on an outer circumferential surface of the attachment part (45);
a fastening tool (54) configured to fasten the elastic member (53) to the attachment part (45) and kept from turning about the central axis (X) with respect to the cutting machine body (2);
wherein the fastening tool (54) includes a screw (56), and a fastening force is adjustable through rotation of the screw (56);
wherein the fastening tool (54) includes a band (55) that surrounds the elastic member (53), and a fastening force of the band (55) is changeable through the rotation of the screw (56);
wherein the band (55) includes a first projecting piece (55a) and a second projecting piece (55b) projecting radially outward and circumferentially spaced apart from each other, the first projecting piece (55a) and the second projecting piece (55b) including a first insertion hole (55c) and a second insertion hole (55d), respectively, into which the screw (56) is inserted;
wherein the screw (56) is inserted from the first insertion hole (55c) to the second insertion hole (55d), and is screwed into a nut (57) located on a side of the second projecting piece (55b) opposite to the first projecting piece (55a);
the cutting machine body (2) includes a housing recess (52a) for housing the first projecting piece (55a), the second projecting piece (55b), the screw (56), and the nut (57); and
wherein the first projecting piece (55a), the second projecting piece (55b), the screw (56) and the nut (57) project radially outward beyond the band (55), and engage with an inner surface of the housing recess (52a).

2. The portable cutting machine (1) of claim 1, wherein
the elastic member (53) has a cylindrical shape, and
an inner circumferential surface (53a) of the elastic member (53) comes into contact with the outer circumferential surface of the attachment part (45).

3. The portable cutting machine (1) of claim 2, wherein
a sliding member (30) is interposed between the inner circumferential surface (53a) of the elastic member (53) and the outer circumferential surface of the attachment part (45).

4. The portable cutting machine (1) of any of claims 1 to 3, wherein
the band (55) includes an engaging portion to engage with the elastic member (53).

5. The portable cutting machine (1) of any of claims 1 to 4, wherein
the elastic member (53), together with the fastening tool (54), is substantially kept from turning about the central axis (X) with respect to the cutting machine body (2).

6. The portable cutting machine (1) of any of claims 1 to 5, wherein
the housing recess (52a) is formed in a holding member (52) that is a component separate from the cutting machine body (2).

7. The portable cutting machine (1) of any of claims 1 to 6, wherein
an intermediate member (58) is interposed between the first projecting piece (55a) and the second projecting piece (55b).

8. The portable cutting machine (1) of any of claims 1 to 7, wherein
the cutting machine body (2) includes a main shaft (25) to which the cutting blade (3) is fixed, a bearing member (243) configured to rotatably support the main shaft (25), and a main shaft holder (242) having a cylindrical shape into which the bearing member (243) is inserted,
the attachment part (45) of the protection cover (4) is configured to surround the main shaft holder (242), and
a collar (50) is interposed between the attachment part (45) and the main shaft holder (242).

## Patentansprüche

1. Tragbare Schneidemaschine (1), die Folgendes umfasst:
eine Schneideklinge (3), die eine scheibenartige Form aufweist und dazu konfiguriert ist, ein Schneideziel durch eine Drehbewegung um eine Mittelachse (X) zu schneiden;
einen Schneidemaschinenkörper (2), der dazu konfiguriert ist, die Schneideklinge (3) drehbar zu lagern;
eine Schutzabdeckung (4), die einen Abschnitt in einer Umfangsrichtung der Schneideklinge (3) abdeckt und einen anderen Abschnitt als den Abschnitt in der Umfangsrichtung der Schneideklinge (3) freilegt, wobei die Schutzabdeckung (4) ein Anbringungsteil (45) enthält, das am Schneidemaschinenkörper (2) so anzubringen ist, dass es um die Mittelachse (X) drehbar ist;
wobei das Anbringungsteil (45) eine zylindrische Form aufweist, die sich um die Mittelachse (X) erstreckt;
ein elastisches Element (53), das an einer Außenumfangsfläche des Anbringungsteils (45) angeordnet ist;
ein Befestigungswerkzeug (54), das dazu konfiguriert ist, das elastische Element (53) an das Anbringungsteil (45) zu befestigen, und daran gehindert wird, sich um die Mittelachse (X) in Bezug auf den Schneidemaschinenkörper (2) zu drehen;
wobei das Befestigungswerkzeug (54) eine Schraube (56) enthält und eine Befestigungskraft durch Drehung der Schraube (56) einstellbar ist;
wobei das Befestigungswerkzeug (54) ein Band (55) enthält, das das elastische Element (53) umgibt, und eine Befestigungskraft des Bands (55) durch die Drehung der Schraube (56) einstellbar ist;
wobei das Band (55) ein erstes vorstehendes Stück (55a) und ein zweites vorstehendes Stück (55b) umfasst, die radial nach außen vorstehen und in Umfangsrichtung voneinander beabstandet sind, wobei das erste vorstehende Stück (55a) und das zweite vorstehende Stück (55b) ein erstes Einführloch (55c) bzw. ein zweites Einführloch (55d) enthalten, in die die Schraube (56) eingeführt wird;
wobei die Schraube (56) vom ersten Einführloch (55c) zum zweiten Einführloch (55d) eingeführt und in eine Mutter (57) geschraubt wird, die sich auf einer Seite des zweiten vorstehenden Stücks (55b) entgegengesetzt zum ersten vorstehenden Stück (55a) befindet;
der Schneidemaschinenkörper (2) eine Gehäuseaussparung (52a) zum Aufnehmen des ersten vorstehenden Stücks (55a), des zweiten vorstehenden Stücks (55b), der Schraube (56) und der Mutter (57) enthält; und
wobei das erste vorstehende Stück (55a), das zweite vorstehende Stück (55b) die Schraube (56) und die Mutter (57) radial nach außen über das Band (55) hinaus vorstehen und mit einer Innenfläche der Gehäuseaussparung (52a) in Eingriff gelangen.

2. Tragbare Schneidemaschine (1) nach Anspruch 1, wobei
das elastische Element (53) eine zylindrische Form aufweist, und
eine innere Umfangsfläche (53a) des elastischen Elements (53) mit der äußeren Umfangsfläche des Anbringungsteils (45) in Kontakt kommt.

3. Tragbare Schneidemaschine (1) nach Anspruch 2, wobei
ein Gleitelement (30) zwischen der inneren Umfangsfläche (53a) des elastischen Elements (53) und der äußeren Umfangsfläche des Anbringungsteils (45) eingefügt ist.

4. Tragbare Schneidemaschine (1) nach einem der Ansprüche 1 bis 3, wobei
das Band (55) einen Eingriffsabschnitt zum Eingriff mit dem elastischen Element (53) enthält.

5. Tragbare Schneidemaschine (1) nach einem der Ansprüche 1 bis 4, wobei
das elastische Element (53) zusammen mit dem Befestigungswerkzeug (54) im Wesentlichen daran gehindert wird, sich um die Mittelachse (X) in Bezug auf den Schneidemaschinenkörper (2) zu drehen.

6. Tragbare Schneidemaschine (1) nach einem der Ansprüche 1 bis 5, wobei
die Gehäuseaussparung (52a) in einem Halteelement (52) ausgebildet ist, das eine vom Schneidemaschinenkörper (2) getrennte Komponente ist.

7. Tragbare Schneidemaschine (1) nach einem der Ansprüche 1 bis 6, wobei
ein Zwischenelement (58) zwischen dem ersten vorstehenden Stück (55a) und dem zweiten vorstehenden Stück (55b) eingefügt ist.

8. Tragbare Schneidemaschine (1) nach einem der Ansprüche 1 bis 7, wobei
der Schneidemaschinenkörper (2) eine Hauptwelle (25), an der die Schneideklinge (3) fixiert ist, ein Lagerelement (243), das dazu konfiguriert ist, die Hauptwelle (25) drehbar zu lagern, und einen Hauptwellenhalter (242) mit zylindrischer Form, in den das Lagerelement (243) eingesetzt ist, enthält,
das Anbringungsteil (45) der Schutzabdeckung (4) dazu konfiguriert ist, den Hauptwellenhalter (242) zu umgeben, und
ein Kragen (50) zwischen dem Anbringungsteil (45) und dem Hauptwellenhalter (242) eingefügt ist.

## Revendications

1. Machine de découpe portable (1), comprenant :
une lame de découpe (3) ayant une forme de disque et configurée pour découper une cible de découpe par un mouvement de rotation autour d'un axe central (X) ;
un corps de machine de découpe (2) configuré pour supporter en rotation la lame de découpe (3) ;
un couvercle de protection (4) couvrant une partie dans une direction circonférentielle de la lame de découpe (3) et exposant une partie autre que la partie dans la direction circonférentielle de la lame de découpe (3), le couvercle de protection (4) comprenant une partie d'attache (45) à attacher au corps de machine de découpe (2) de manière à pouvoir tourner autour de l'axe central (X)
la partie d'attache (45) ayant une forme cylindrique s'étendant autour de l'axe central (X) ;
un élément élastique (53) disposé sur une surface circonférentielle extérieure de la partie d'attache (45) ;
un outil de fixation (54) configuré pour fixer l'élément élastique (53) à la partie d'attache (45) et empêché de tourner autour de l'axe central (X) par rapport au corps de machine de découpe (2) ;
dans lequel l'outil de fixation (54) comprend une vis (56), et une force de fixation est réglable par rotation de la vis (56) ;
dans lequel l'outil de fixation (54) comprend une bande (55) qui entoure l'élément élastique (53), et une force de fixation de la bande (55) peut être modifiée par la rotation de la vis (56) ;
dans lequel la bande (55) comprend une première pièce en saillie (55a) et une deuxième pièce en saillie (55b) faisant saillie radialement vers l'extérieur et espacées de manière circonférentielle l'une de l'autre, la première pièce en saillie (55a) et la deuxième pièce en saillie (55b) comprenant un premier trou d'insertion (55c) et un deuxième trou d'insertion (55d), respectivement, dans lesquels la vis (56) est insérée ;
dans lequel la vis (56) est insérée du premier trou d'insertion (55c) au deuxième trou d'insertion (55d), et est vissée dans un écrou (57) situé sur un côté de la deuxième pièce en saillie (55b) opposé à la première pièce en saillie (55a)
le corps de machine de découpe (2) comprend un évidement de logement (52a) pour loger la première pièce en saillie (55a), la deuxième pièce en saillie (55b), la vis (56), et l'écrou (57) ; et
dans lequel la première pièce en saillie (55a), la deuxième pièce en saillie (55b), la vis (56) et l'écrou (57) font saillie radialement vers l'extérieur au-delà de la bande (55), et s'engagent avec une surface intérieure de l'évidement de logement (52a).

2. Machine de découpe portable (1) de la revendication 1, dans laquelle
l'élément élastique (53) a une forme cylindrique, et
une surface circonférentielle intérieure (53a) de l'élément élastique (53) entre en contact avec la surface circonférentielle extérieure de la partie d'attache (45).

3. Machine de découpe portable (1) de la revendication 2, dans laquelle
un élément coulissant (30) est interposé entre la surface circonférentielle intérieure (53a) de l'élément élastique (53) et la surface circonférentielle extérieure de la partie d'attache (45).

4. Machine de découpe portable (1) de l'une des revendications 1 à 3, dans laquelle
la bande (55) comprend une partie d'engagement pour s'engager avec l'élément élastique (53).

5. Machine de découpe portable (1) de l'une des revendications 1 à 4, dans laquelle
l'élément élastique (53), conjointement avec l'outil de fixation (54), est sensiblement empêché de tourner autour de l'axe central (X) par rapport au corps de machine de découpe (2).

6. Machine de découpe portable (1) de l'une des revendications 1 à 5, dans laquelle
l'évidement de logement (52a) est formé dans un élément de maintien (52) qui est un composant séparé du corps de machine de découpe (2).

7. Machine de découpe portable (1) de l'une des revendications 1 à 6, dans laquelle
un élément intermédiaire (58) est interposé entre la première pièce en saillie (55a) et la deuxième pièce en saillie (55b).

8. Machine de découpe portable (1) de l'une des revendications 1 à 7, dans laquelle
le corps de la machine de découpe (2) comprend un arbre principal (25) auquel la lame de découpe (3) est fixée, un élément de palier (243) configuré pour supporter en rotation l'arbre principal (25), et un support d'arbre principal (242) ayant une forme cylindrique dans lequel l'élément de palier (243) est inséré,
la partie d'attache (45) du couvercle de protection (4) est configurée pour entourer le support d'arbre principal (242), et
un collier (50) est interposé entre la partie d'attache (45) et le support d'arbre principal (242).
